# EUROPÄISCHE PATENTSCHRIFT

(11) **EP 3 212 364 B1**
(45) Veröffentlichungstag und Bekanntmachung des Hinweises auf die Patenterteilung: **05.09.2018**
(21) Anmeldenummer: 15786913.2
(22) Anmeldetag: 26.10.2015
(51) Int. Cl.: B25J 9/16

(54) **VERFAHREN UND ROBOTERSYSTEM ZUR AUTOMATISCHEN BAHNERMITTLUNG**
METHOD AND ROBOT SYSTEM FOR AUTOMATICALLY DETERMINING TRAJECTORIES
PROCÉDÉ ET SYSTÈME DE ROBOT DE DÉTECTION DE TRAJECTOIRE AUTOMATIQUE

(30) Priorität: 27.10.2014 DE 102014221797
(43) Veröffentlichungstag der Anmeldung: 06.09.2017
(73) Patentinhaber: KUKA Systems GmbH, 86165 Augsburg (DE)
(72) Erfinder: NEUREITER, Reinhard, 80469 München (DE); MEMET, Moustafa, 86167 Augsburg (DE)
(74) Vertreter: Tillmann, Axel
(86) Internationale Anmeldenummer: PCT/EP2015/074715
(87) Internationale Veröffentlichungsnummer: WO 2016/066572

(56) Entgegenhaltungen:
- WO-A1-2004/108363
- DE-A1- 19 943 318
- DE-U1-202008 003 687
- DE-U1-202011 000 315
- US-B1- 6 228 089
- TSUNEO YOSHIKAWA ET AL: "Hybrid Position/Force Control of Flexible-Macro/Rigid-Micro Manipulator Systems", IEEE TRANSACTIONS ON ROBOTICS AND AUTOMATION, IEEE INC, NEW YORK, US, Bd. 12, Nr. 4, 1. August 1996 (1996-08-01) , XP011053140, ISSN: 1042-296X

## Beschreibung

### 1. Technischer Bereich

Die vorliegende Erfindung betrifft allgemein ein Verfahren und ein Robotersystem zum Erfassen von Bahnpunkten auf einem Werkstück, und weiterhin zum Bearbeiten des Werkstücks anhand der erfassten Bahnpunkte.

### 2. Technischer Hintergrund

Roboter, und insbesondere Industrieroboter, werden für verschiedene Arbeitsprozesse in beispielsweise der Montage oder Fertigung im industriellen Umfeld eingesetzt. Industrieroboter sind automatisch gesteuerte, wieder-programmierbare und vielfach einsetzbare Handhabungsgeräte mit mehreren Freiheitsgraden. Sie können beweglich oder auch ortsfest eingesetzt werden und bestehen im Allgemeinen aus einem Manipulator (Roboterarm), welcher aus mehreren beweglichen Achsen aufgebaut und durch entsprechende Antriebe und eine Steuereinrichtung bewegt werden kann. Am Ende eines Roboterarms befindet sich üblicherweise ein Endeffektor, welcher an einen Handflansch des Roboters gekoppelt ist, und als Arbeitsorgan verschiedene Aufgaben ausführen kann. So kann ein Industrieroboter mit entsprechendem Endeffektor beispielsweise zum Falzen von Karosserieteilen bei der Produktion von Automobilen eingesetzt werden.

Während des Arbeitsprozesses fährt der Roboter, bzw. der Endeffektor des Roboters eine Trajektorie oder Bahn ab, wobei der Endeffektor zu bestimmten Zeitpunkten bestimmte Bahnpunkte erreicht. Vor dem Einsatz des Roboters müssen die Positionen der Bahnpunkte zunächst erfasst werden. Für diverse Arbeitsprozesse, wie u. a. für das Falzen, werden die Bahnpunkte für den Roboter üblicherweise per CAD-Modell offline mittels eines Simulations-Tools (wie beispielsweise RobCAD) generiert. Die so generierten Bahnpunkte werden dann an das Robotersystem übertragen. Die Bahnpunkte sind dabei meistens in einer zugehörigen Base, wie beispielsweise einem konkreten Falzbett, als Koordinaten hinterlegt. Aufgrund der Summe der Fertigungstoleranzen in Produktionsstätten können sich die reale Umgebung und die reale Struktur der zu bearbeitenden Werkstücke teilweise stark von den offline zur Verfügung stehenden CAD-Modellen unterscheiden. Deshalb werden während der Inbetriebnahme des Roboters die Bahnpunkte auf das zu bearbeitende Bauteil, oder Werkstück, optimiert, um die Qualitätsanforderungen an beispielsweise das Falzbauteil zu erfüllen. Da die zu bearbeitenden Werkstücke teilweise komplexe Konturen aufweisen, können viele Bahnpunkte erforderlich sein. Beim Falzen werden typischerweise 200 Punkte pro Bahn und Falzschritt offline generiert, und da meist drei Schritte während des Falzprozesses notwendig sind, müssen somit bei der Inbetriebnahme 600 Bahnpunkte optimiert werden. Dementsprechend ist das Optimieren der Bahnpunkte während der Inbetriebnahme zeitaufwändig und weiterhin auch stark von der Fachkompetenz des Programmierers abhängig.

Die Druckschrift DE 199 43 318 A1 offenbart ein Verfahren und eine Vorrichtung zum Erfassen der Position von Bahnpunkten einer Trajektorie, die entlang eines Werkstücks verläuft. Dabei wird ein Werkzeug wird mit Hilfe eines Roboters in eine Arbeitsrichtung entlang zumindest eines Teils der Trajektorie bewegt, wobei das Werkzeug in Arbeitsrichtung nachgiebig ausgebildet ist. Das Werkzeug wird mit Hilfe eines an dem Roboter befestigten Kraft-/Momentensensors entlang der Trajektorie manuell geführt und die Signale des Kraft-/Momentensensors werden in Steuersignale zum Bewegen des Roboters umgesetzt. Die Position des Werkzeugs und die Ausrichtung des Werkzeugs wird während der Bewegung entlang der Trajektorie erfasst.

Vor diesem Hintergrund ist es das Ziel der vorliegenden Erfindung ein Verfahren und ein System bereitzustellen, welches ein automatisches Erfassen bzw. Optimieren von Bahnpunkten ermöglicht. Dabei soll insbesondere eine einfache und schnelle Inbetriebnahme von Falzapplikationen umgesetzt werden. Ein weiteres Ziel der vorliegenden Erfindung ist es, die Anzahl der manuell zu optimierenden Bahnpunkte zu reduzieren. Ferner ist es ein Ziel der vorliegenden Erfindung, ein Verfahren zum Bearbeiten eines Werkstücks durch einen Roboter bereitzustellen, wobei die oben genannten Nachteile während der Inbetriebnahme des Roboters ausgeräumt werden. Die Aufgabe wird mit den Verfahren gemäß Anspruch 1 und 10 und dem Robotersystem gemäß Anspruch 11 gelöst.

### 3. Inhalt der Erfindung

Ein erfindungsgemäßes Verfahren betrifft das Erfassen von Bahnpunkten auf einem Werkstück, wobei dieses Werkstück durch einen Industrieroboter anhand der erfassten Bahnpunkte bearbeitet werden soll. So können die erfassten Bahnpunkte beispielsweise dazu dienen, das Werkstück mittels eines Industrieroboters zu falzen. Der Industrieroboter kann dabei jede Art von Roboter sein, welcher zumindest einen Handflansch zur Aufnahme eines Hilfsgeräts, wie beispielsweise eines Werkszeugs, aufweist. Ferner kann das Werkstück irgendein Objekt sein, welches durch den Industrieroboter bearbeitet werden soll.

In einem ersten Schritt wird an einen Handflansch des Industrieroboters ein mehrachsiger Gelenkarmroboter gekoppelt. Der Gelenkarmroboter wird dabei vorzugsweise trennbar an den Industrieroboter gekoppelt. Weiter sind Sensoren vorgesehen, insbesondere Momentsensoren, zur Erfassung der an den Achsen des Gelenkarmroboters wirkenden Kräfte und/oder Drehmomente. Als Sensoren kommen bevorzugt Kraft-Momenten-Sensoren zu Einsatz, und zwar insbesondere Sensoren die auf Dehnungsmessstreifen (DMS) basieren, die an den Achsen - oder zumindest an einer Achse - des Gelenkarmroboters angeordnet sind. Dehnungsmessstreifen erlauben eine besonders präzise Erfassung der wirkenden Kräfte. Weiter bevorzugt sind alle Achsen des Roboters mit derartigen Kraft-Momenten-Sensoren ausgestattet. Damit ist eine besonders wirkungsvolle Steuerung und Überwachung des Roboters möglich. Der Roboter kann dabei vorzugsweise in mindestens einem seiner Freiheitsgrade mittels Nachgiebigkeitsregelung betrieben werden, wobei diese Regelung insbesondere mittels einer Impedanzregelung, einer Admittanzregelung, einer Positionsregelung oder einer Drehmomentenregelung erfolgen kann.

Der Gelenkarmroboter weist einen Endeffektor auf, welcher einen Kraftschluss zwischen dem Gelenkarmroboter und dem Werkstücks erlaubt. Der Endeffektor kann sowohl vor als auch nach der Kopplung des Gelenkarmroboters an den Industrieroboter an den Gelenkarmroboter montiert werden. Vorzugsweise umfasst der Endeffektor eine Messrolle, die entlang des Werkstücks rollen kann.

Diese Kopplung des Gelenkarmroboters an den Industrieroboter kann beispielsweise während der Inbetriebnahme des Roboters an seinem Arbeitsort erfolgen. Der Zeitpunkt der Kopplung ist für die vorliegende Erfindung unerheblich, muss jedoch vor dem Schritt des Anfahrens des Werkstücks erfolgen.

Nach der Kopplung wird das Werkstück durch den Gelenkarmroboter angefahren. Dabei kann der Gelenkarmroboter manuell an das Werkstück herangefahren werden, vorzugsweise geschieht das Anfahren allerdings automatisch. Vorzugsweise wird während des Anfahrens anhand der erfassten Kräfte und/oder Drehmomente überprüft, ob ein Endeffektor des Gelenkarmroboters das Werkstück berührt. Wenn festgestellt wird, dass der Endeffektor des Gelenkarmroboters das Werkstück berührt, wird vorzugsweise das Anfahren des Werkstücks beendet.

In einem folgenden Schritt wird das Werkstück durch den Gelenkarmroboter abgefahren. Während diesem Abfahren oder Abtasten berührt der Endeffektor des Gelenkroboters das Werkstück. Mit anderen Worten, während der Gelenkarmroboter das Werkstück abfährt, bzw. der Kontur des Werkstücks folgt, ist dieser Gelenkarmroboter bzw. der Endeffektor des Gelenkarmroboters kontinuierlich in Kontakt mit dem Werkstück. Aufgrund des Kraftschlusses zwischen dem Endeffektor des Gelenkarmroboters und dem Werkstück kann der Gelenkarmroboter seine Bewegung um das Werkstück oder die Kontur des Werkstücks automatisch abzufahren, ohne dabei den Kontakt mit dem Werkstück zu verlieren.

Während der Gelenkarmroboter das Werkstück bzw. die Kontur des Werkstücks abfährt, werden die Bahnpunkte auf dem Werkstück erfasst und abgespeichert. Somit ist es möglich, durch das Abfahren des Werkstücks und aufgrund des Kraftschlusses zwischen dem Endeffektor des Gelenkarmroboters und dem Werkstück die Bahnpunkte auf dem Werkstück zu ermitteln. In anderen Worten erlaubt es die vorliegende Erfindung das Werkstück mittels des Gelenkarmroboters zu vermessen. Durch die Kopplung des Gelenkarmroboters an den Industrieroboter können die Koordinatensysteme der beiden Roboter vorzugsweise übereinstimmen, sodass die erkannten Bahnpunkte vorzugsweise direkt, sprich ohne Koordinatentransformation, von dem Industrieroboter zur Bearbeitung des Werkstücks verwendet werden können.

Da vorzugsweise die an den Achsen des Gelenkarmroboters wirkenden Kräfte und/oder Drehmomente erfasst werden, kann anhand dieser Werte die Bewegung des Gelenkarmroboters während des Abfahrens des Werkstücks derart angepasst werden, dass der Endeffektor des Gelenkarmroboters automatisch der Kontur des Werkstücks folgt und dabei ständig in Kontakt mit dem Werkstück ist, ohne dass dieses beschädigt oder verschoben wird.

In einer bevorzugten Ausführungsform wird zudem ein initialer Satz von Bahnpunkten bereitgestellt. Dieser initiale Satz kann dabei vorzugsweise offline generierte CAD-Daten umfassen, welche das Werkstück beschreiben. Der initiale Satz von Bahnpunkten kann dabei zu jedem Zeitpunkt vor Abfahren des Werkstücks bereitgestellt werden. Vorzugsweise wird der initiale Satz von Bahnpunkten durch das erfindungsgemäße Verfahren optimiert, wobei ein zweiter Satz von Bahnpunkten erstellt werden kann oder auch die Bahnpunkte des initialen Satzes aktualisiert werden können, d.h. an die real erfassten Bahnpunkte angepasst werden können.

In einer weiteren bevorzugten Ausführungsform wird das Anfahren des Werkstücks basierend auf dem initialen Satz von Bahnpunkten durchgeführt. Dementsprechend muss der initiale Satz von Bahnpunkten vor diesem Anfahren des Werkstücks bereitgestellt sein. Alternativ oder zusätzlich kann auch das Abfahren des Werkstücks basierend auf dem initialen Satz von Bahnpunkten erfolgen. In diesem Fall muss der initiale Satz von Bahnpunkten vor dem Abfahren des Werkstücks bereitgestellt sein. Aufgrund dieses initialen Satzes von Bahnpunkten kann der Gelenkroboter leichter ermitteln, wo sich das zu bearbeitende und zu erfassende Werkstück befindet. So kann der Roboter einen Bahnpunkt entsprechend des initialen Satzes von Bahnpunkten anfahren und in der näheren Umgebung dieses Punktes das Werkstück suchen, falls kein Kontakt mit dem Werkstück festgestellt wird. Ferner kann der Gelenkarmroboter anhand dieses initialen Satzes von Bahnpunkten effizient das Werkstück abfahren, während der Endeffektor des Gelenkarmroboters das Werkstück berührt.

Der Fachmann versteht dabei, dass der initiale Satz von Bahnpunkten nicht mit dem entsprechend dem erfindungsgemäßen Verfahren erfassten Satz von Bahnpunkten übereinstimmen muss. Ferner versteht der Fachmann, dass der initiale Satz von Bahnpunkten nicht die genaue Position des Werkstücks und die genaue Kontur des Werkstücks wiedergeben muss, und dass der Gelenkroboter während des Anfahrens des Werkstücks beispielsweise iterative Abläufe durchführt, bis der Endeffektor des Gelenkarmroboters das Werkstück berührt.

In einer weiteren bevorzugten Ausführungsform umfasst das Bestimmen, dass der Endeffektor des Gelenkarmroboters das Werkstück berührt, ein Feststellen, dass die an den Achsen des Gelenkarmroboters wirkenden Kräfte und/oder Drehmomente einen vorgegebenen Wert übersteigen. In anderen Worten nähert sich der Endeffektor des Gelenkarmroboters dem Werkstück, bis eine bestimmte Kraft und/oder ein bestimmtes Drehmoment überschritten wird. Der Fachmann versteht dabei, dass die an den Achsen auftretenden Drehmomente durch die Steuerung verrechnet werden, und die Steuerung derart eingerichtet sein kann, dass ein Signal ausgegeben werden kann, wenn beispielsweise ein bestimmter Widerstand erfasst wird.

In einer weiteren bevorzugten Ausführungsform werden während des Abfahrens des Werkstücks die Kräfte und/oder Drehmomente überwacht, welche auf die Achsen des Gelenkarmroboters wirken. Basierend auf diesen überwachten Kräften und/oder Drehmomenten wird das Abfahren des Werkstücks angepasst, so dass der Endeffektor des Gelenkarmroboters während des Abfahrens ständig in Kontakt mit dem Werkstück ist. Vorzugsweise erfolgt das Abfahren des Werkstücks durch den Gelenkarmroboter derart, dass eine vorbestimmte Anpresskraft des Endeffektors an das Werkstück nicht überschritten wird. Diese vorbestimmte Anpresskraft kann dabei sowohl einen vorgegebenen Wert als auch einen vorgegebenen Wertebereich umfassen.

In einer weiteren bevorzugten Ausführungsform wird weiterhin überprüft, ob die Dimension des Werkstücks die Reichweite des Gelenkarmroboters übersteigt. Falls bestimmt wird, dass die Dimension des Werkstücks die Reichweite des Gelenkarmroboters übersteigt, orientiert sich der Industrieroboter um, so dass der Gelenkarmroboter weitere Bereiche des Werkstücks erreichen kann. Diese Schritte können dabei zu verschiedenen Zeitpunkten während des erfindungsgemäßen Verfahrens stattfinden. Beispielsweise kann mittels des erfindungsgemäßen Verfahrens erst ein Teil des Werkstücks durch den Endeffektor des Gelenkarmroboters abgefahren werden um Bahnpunkte für diesen Teil des Werkstücks zu erfassen, bevor der Industrieroboter wie beschrieben umorientiert wird und weitere Bahnpunkte ermittelt werden. Alternativ kann der Industrieroboter auch umorientiert werden, bevor das Werkstück erstmals durch den Gelenkarmroboter angefahren oder abgefahren wird, oder der Industrieroboter fährt kontinuierlich mit dem Gelenkarmroboter mit.

Ein erfindungsgemäßes Verfahren zum Bearbeiten eines Werkstücks umfasst das Durchführen des erfindungsgemäßen Verfahrens zum Erfassen von Bahnpunkten auf einem Werkstück. Im Anschluss an das Erfassen der Bahnpunkte wird der Gelenkarmroboter von dem Handflansch des Industrieroboters abgekoppelt und ein Werkzeug an den Handflansch des Industrieroboters gekoppelt. Folgend wird das Werkstück durch den Industrieroboter anhand der erfassten Bahnpunkte mithilfe des Werkszeugs bearbeitet. Vorzugsweise ist das Werkzeug dabei ein Falzwerkzeug und das Bearbeiten des Werkstücks umfasst vorzugsweise ein Falzen des Werkstücks.

Das erfindungsgemäße Robotersystem - umfassend einen Industrieroboter, welcher zumindest einen Handflansch aufweist zum trennbaren Koppeln eines mehrachsigen Gelenkarmroboters - ist mit einer Steuervorrichtung versehen, die zur Durchführung eines erfindungsgemäßen Verfahrens eingerichtet ist, um die beschriebenen Verfahrensschritte ausführen zu können.

### 4. Ausführungsbeispiele

Im Folgenden wird die Erfindung unter Bezugnahme auf die beigefügten Figuren genauer erläutert. Hierbei zeigt:
Fig. 1 ein erfindungsgemäßes Robotersystem;
Fig. 2 ein Flussdiagramm, welches schematisch und beispielhaft den Ablauf des erfindungsgemäßen Verfahrens zum Erfassen von Bahnpunkten auf einem Werkstück darlegt;
Fig. 3 ein Flussdiagramm, welches schematisch und beispielhaft den Ablauf des erfindungsgemäßen Verfahrens zum Bearbeiten eines Werkstücks darlegt.

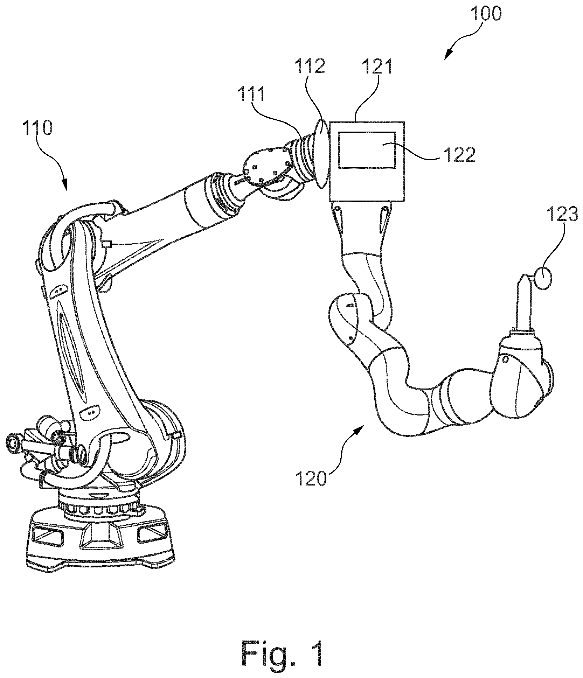

Die Fig. 1 zeigt ein Robotersystem 100. Dieses besteht aus einem Industrieroboter 110, welcher ortsfest installiert ist. Alternativ kann der Industrieroboter 110 auch mobil eingerichtet sein, etwa mittels einer Linearachse. An dem Handflansch 111 des Industrieroboters 110 ist ein Werkzeugwechsler 112 angebracht. Dieser ist über eine universelle Plattform 121 mit einem mehrachsigen Gelenkarmroboter 120 verbunden. Die universelle Plattform 121 enthält dabei eine Steuerung 122 zum Steuern des Systems. Am Ende des mehrachsigen Gelenkarmroboters ist eine Messrolle 123 angebracht. Der dargestellte Gelenkarmroboter 120 ist als Leichtbauroboter ausgebildet und besteht aus leichtgewichtigen Materialien, wie z. B. Leichtmetallen oder Kunststoff.

Die universelle Plattform 121, welche mit dem Gelenkarmroboter gekoppelt ist, ermöglicht es den Gelenkarmroboter an mehreren Stationen im industriellen Umfeld einzusetzen. Das geringe Eigengewicht und die kleine Baugröße des als Gelenkarmroboter 120 ausgebildeten Leichtbauroboters ermöglichen einen problemlosen Transport zwischen verschiedenen Stationen in einem Werk.

Der Gelenkarmroboter 120 besteht aus einzelnen Elementen, die durch mehrere Gelenke miteinander verbunden sind, wobei sich die Gelenke unabhängig voneinander bewegen können. Folglich ist der mehrachsige Gelenkarmroboter 120 derart ausgebildet, dass er flexibel ist und aufgrund seiner erhöhten Flexibilität mehrere Haltungen einnehmen kann.

Die Steuerung 122 kontrolliert und steuert die Bewegungen des Gelenkarmroboters 120. Allerdings können der Industrieroboter 110 und der Gelenkarmroboter 120 vorzugsweise auch eine gemeinsame Steuerung (nicht dargestellt) aufweisen.

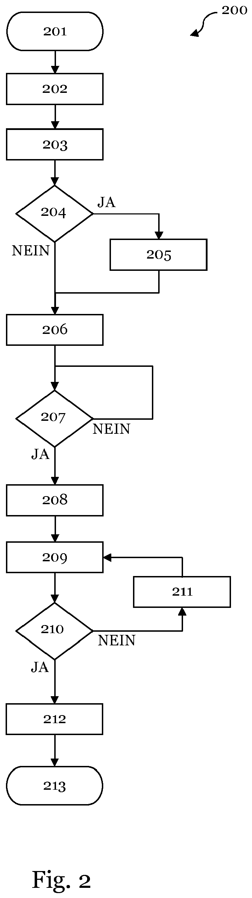

Die Fig. 2 zeigt ein Ablaufdiagramm zur Durchführung eines erfindungsgemäßen Verfahrens 200. Im Folgenden wird das Verfahren 200 exemplarisch in Bezug auf das in Fig. 1 dargestellte System 100 beschrieben. Das Verfahren 200 beginnt im Schritt 201. Im Schritt 202 wird der mehrachsige Gelenkarmroboter 120 an den Handflansch 111 des Industrieroboters 110 gekoppelt. Im Schritt 203 wird ein initialer Satz von Bahnpunkten der Steuerung 112 zur Verfügung gestellt, welcher beispielsweise offline mittels eines CAD-Programms erstellt worden ist.

Im Schritt 204 wird überprüft, ob die Dimension des Werkstücks die Reichweite des Gelenkarmroboters 120 übersteigt. Alternativ kann auch überprüft werden, ob der Gelenkarmroboter 120 aufgrund der Stellung des Industrieroboters und der Lage des Werkstücks dieses überhaupt nicht erreichen kann. Falls die Prüfung 204 positiv beurteilt ist, wird im Schritt 205 der Industrieroboter 110 umorientiert, so dass der Gelenkarmroboter 120 das Werkstück ggf. besser erreichen kann.

Im Schritt 206 fährt der Gelenkarmroboter 120 das Werkstück an, so dass sich der Endeffektor bzw. die Messrolle 123 des Gelenkarmroboters 120 dem Werkstück nähert. Im Schritt 207 wird überprüft, ob die Messrolle 123 das Werkstück berührt. Hierzu werden die Signale der Kraft- bzw. Momentensensoren des Gelenkarmroboters überwacht und ausgewertet. Wenn die Messrolle 123 das Werkstück berührt, kann dies durch die Kraft- bzw. Momentensensoren detektiert werden und im Schritt 208 wird dann das Anfahren an das Werkstücks gestoppt.

Im Schritt 209 wird das Werkstück durch den Gelenkarmroboter 120 abgefahren, wobei die grundlegende Struktur und/oder Orientierung des Werkstücks durch den initialen Satz von Bahnpunkten gegeben ist. Alternativ kann der Gelenkarmroboter auch manuell geführt werden, um Bahnpunkte händisch zu teachen. Während das Werkstück abgefahren wird, ist die Messrolle 123 des Gelenkarmroboters 120 ständig in Kontakt mit dem Werkstück. Hierfür wird während dem Abfahren in Schritt 210 überprüft, ob die Anpresskraft der Messrolle 123 auf das Werkstück einem vorgegebenen Wert entspricht bzw. in einem vorgegebenen Wertebereich liegt. Hierzu werden die Kräfte und/oder Drehmomente, welche auf die Achsen des Gelenkarmroboters 120 wirken, überwacht. Falls dies nicht der Fall ist, wird in Schritt 211 die Steuerung und das Abfahren des Werkstücks derart basierend auf den überwachten Kräften und/oder Drehmomenten angepasst, dass die Anpresskraft dem vordefinierten Wert entspricht bzw. in dem vorgegebenen Wertebereich liegt. Durch den Kraftschluss zwischen der Messrolle 123 und dem Werkstück können im Schritt 212 während dem Abfahren die Bahnpunkte auf dem Werkstück erfasst bzw. ermittelt werden. Das erfindungsgemäße Verfahren 200 endet im Schritt 213.

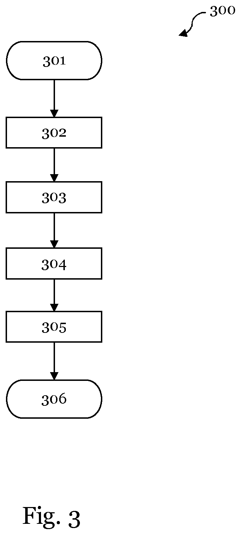

Die Fig. 3 zeigt ein Ablaufdiagramm zur Durchführung eines weiteren erfindungsgemäßen Verfahrens 300 zum Bearbeiten eines Werkstücks. Das Verfahren 300 beginnt im Schritt 301. In Schritt 302 werden die Bahnpunkte auf dem Werkstück erfasst. Hierfür kann vorzugsweise das erfindungsgemäße Verfahren 200 entsprechend Fig. 2 durchgeführt werden.

Im Anschluss an das Erfassen bzw. Ermitteln der Bahnpunkte auf dem Werkstück wird in Schritt 303 der Gelenkarmroboter 120 von dem Handflansch 111 des Industrieroboters 110 entfernt bzw. abgekoppelt. In Schritt 304 wird ein Werkzeug an den Handflansch 111 des Industrieroboters 110 gekoppelt. Vorzugsweise ist dieses Werkzeug ein Falzwerkzeug zum Falzen des Werkstücks. In Schritt 305 wird das Werkstück durch den Industrieroboter 110 bearbeitet, wobei der Industrieroboter 110 die zuvor erfassten Bahnpunkte abfährt. Vorzugsweise umfasst dieses Bearbeiten ein Falzen des Werkstücks.

Der Fachmann versteht, dass unterschiedliche Abwandlungen der beschriebenen Ausführungsformen möglich sind, da nicht alle Schritte des Verfahrens 200 bzw. 300 durchgeführt werden müssen. Dabei versteht der Fachmann, dass auch ein oder mehrere Schritte zugefügt werden können und dass ein oder mehrere Schritte des Verfahrens in einer anderen Reihenfolge durchgeführt werden können.

### Bezugszeichenliste:

- 100: Robotersystem
- 110: Industrieroboter
- 111: Handflansch
- 112: Werkzeugwechsler
- 120: Gelenkarmroboter
- 121: universelle Plattform
- 122: Steuerung
- 123: Messrolle

## Patentansprüche

1. Verfahren zum Erfassen von Bahnpunkten auf einem Werkstück, wobei das Werkstück durch einen Industrieroboter (110) anhand der Bahnpunkte bearbeitet werden soll, aufweisend folgende Verfahrensschritte:
a) Koppeln eines mehrachsigen Gelenkarmroboters (120) an einen Handflansch (111) des Industrieroboters (110), wobei Sensoren zur Erfassung der an den Achsen des Gelenkarmroboters (120) wirkenden Kräfte und/oder Drehmomente vorgesehen sind; und weiter, vorzugsweise in der angegebenen Reihenfolge:
b) Anfahren des Werkstücks durch den Gelenkarmroboter (120);
c) Bestimmen anhand der erfassten Kräfte und/oder Drehmomente, dass ein Endeffektor des Gelenkarmroboters (120) das Werkstück berührt;
d) in Reaktion auf das Bestimmen von Schritt c): Abfahren des Werkstücks durch den Gelenkarmroboter (120), wobei der Endeffektor des Gelenkarmroboters (120) das Werkstück während des Abfahrens berührt; und
e) Erfassen der Bahnpunkte auf dem Werkstück basierend auf dem Abfahren des Werkstücks.

2. Verfahren nach Anspruch 1, weiterhin aufweisend:
vor Schritt b) oder d): Bereitstellen eines initialen Satzes von Bahnpunkten, wobei der initiale Satz von Bahnpunkten vorzugsweise offline generierte CAD-Daten umfasst.

3. Verfahren nach Anspruch 2, wobei das Anfahren des Werkstücks und/oder das Abfahren des Werkstücks basierend auf dem initialen Satz von Bahnpunkten durchgeführt wird.

4. Verfahren nach einem der vorstehenden Ansprüche, wobei das Bestimmen von Schritt c) ein Feststellen, dass die an den Achsen wirkenden Kräfte und/oder Drehmomente einen vorgegebenen Wert übersteigen, umfasst.

5. Verfahren nach einem der vorstehenden Ansprüche, wobei das Abfahren des Werkstücks ein Überwachen der Kräfte und/oder Drehmomente, welche auf die Achsen des Gelenkarmroboters (120) wirken, umfasst, und weiterhin ein Anpassen des Abfahrens des Werkstücks basierend auf den überwachten Kräften und/oder Drehmomenten umfasst, sodass der Endeffektor des Gelenkarmroboters (120) während des Abfahrens in Kontakt mit dem Werkstück ist.

6. Verfahren nach einem der vorstehenden Ansprüche, wobei das Abfahren des Werkstücks durch den Gelenkarmroboter (120) mit einer vorbestimmten Anpresskraft des Endeffektors des Gelenkarmroboters (120) erfolgt.

7. Verfahren nach einem der vorstehenden Ansprüche, weiterhin aufweisend:
Bestimmen, dass die Dimension des Werkstücks die Reichweite des Gelenkarmroboters (120) übersteigt; und
In Reaktion auf das Bestimmen, dass die Dimension des Werkstücks die Reichweite des Gelenkarmroboters (120) übersteigt: Umorientieren des Industrieroboters (110).

8. Verfahren nach einem der vorstehenden Ansprüche, wobei der Endeffektor des Gelenkarmroboters (120) eine Messrolle (123) umfasst.

9. Verfahren nach einem der vorstehenden Ansprüche, wobei die Sensoren Kraft-Momenten-Sensoren sind, insbesondere basierend auf Dehnungsmessstreifen (DMS), und an zumindest einer Achse des Gelenkarmroboters (120) angeordnet sind.

10. Verfahren zum Bearbeiten eines Werkstücks, umfassend Durchführen eines Verfahrens nach einem der Ansprüche 1 bis 9; und weiterhin aufweisend folgende Verfahrensschritte nach dem Erfassen der Bahnpunkte:
Abkoppeln des Gelenkarmroboters (120) von dem Handflansch (111) des Industrieroboters (110);
Koppeln eines Werkzeugs an den Handflansch (111) des Industrieroboters (110); und
Bearbeiten des Werkstücks durch den Industrieroboter (110) anhand der erfassten Bahnpunkte,
wobei das Werkzeug vorzugsweise ein Falzwerkzeug ist und das Bearbeiten des Werkstücks vorzugsweise ein Falzen des Werkstücks umfasst.

11. Robotersystem, umfassend einen Industrieroboter (110), welcher einen Handflansch (111) aufweist zum trennbaren Koppeln eines mehrachsigen Gelenkarmroboters (120), wobei das System mit einer Steuervorrichtung versehen ist, die zur Durchführung eines Verfahrens nach einem der Ansprüche 1 - 10 eingerichtet ist.

## Claims

1. A method for detecting path points on a workpiece, wherein the workpiece by an industrial robot (no) to be processed on the basis of the path points, comprising the following steps:
a) coupling a multi-axis articulated arm (120) to a hand flange (111) of the industrial robot (110), sensors for detecting the (on the axes of the articulated arm 120) forces and/or torques are provided; and further preferably in the given order:
b) start-up of the workpiece by the articulated robot (120);
c) determining from the sensed forces and/or torques that an end effector of the articulated arm (120) contacts the workpiece;
d) in response to the determining step c): retraction of the workpiece (by the articulated arm 120), wherein the end effector of the articulated arm (120) contacts the workpiece during the shut-down; and
e) detecting the path points on the workpiece based on the retraction of the workpiece.

2. The method of claim 1, further comprising:
prior to b) or d) a step of: providing an initial set of railway points, wherein the initial set of path points preferably comprises offline generated CAD data.

3. The method of claim 2, wherein the start-up of the workpiece and/or the retraction of the workpiece is carried out based on the initial set of path points.

4. The method according to any one of the preceding claims, wherein the determining of step c) comprises a determining that the forces acting on the axles forces and/or torques exceed a predetermined value..

5. The method according to any preceding claim, wherein the retraction of the workpiece monitoring the forces and/or includes torques which act on the axes of the articulated arm (120), and further adapting the shut-down of the workpiece based on the monitored forces and/or includes torques, so that the end effector of the articulated arm (120) during the shut-down in contact with the workpiece.

6. The method according to any preceding claim, wherein the retraction of the workpiece by the articulated arm (120) with a predetermined pressing force of the end effector of the articulated arm (120) is carried out.

7. The method according to any one of the preceding claims, further comprising:
determining that the dimension of the workpiece exceeds the range of the articulated arm (120); and
in response to determining that the dimension of the workpiece, the reach of the articulated arm (120) exceeds: reorienting of the industrial robot (110).

8. The method according to any one of the preceding claims, wherein the end effector of the articulated arm (120) includes a measuring roller (123).

9. The method according to any one of the preceding claims, wherein the sensors are force-torque sensors, in particular based on strain gauge (DMS), and on at least one axis of the articulated arm (120) are arranged.

10. A method for machining a workpiece, comprising performing a method according to any one of claims 1 to 9; and further comprising the following method steps after the detection of the path points:
uncoupling of the articulated arm (120) of the hand flange (111) of the industrial robot (110);
coupling a tool to the hand flange (111) of the industrial robot (110); and
machining the workpiece by the industrial robot (110) based on the detected path points, wherein the tool is a folding tool preferably and the machining of the workpiece preferably a folding of the workpiece comprises.

11. A robot system comprising an industrial robot (110) having a hand flange (111) for separably coupling a multi-axis articulated arm (120), wherein the system is provided with a control device designed to carry out a method according to any one of claims 1 to 10.

## Revendications

1. Procédé de détection de points de trajectoire sur une pièce à usiner, dans lequel la pièce à usiner par un robot industriel (101) à traiter sur la base des points de trajet, comprenant les etapes suivantes:
a) coupler un bras articulé multi-axes (120) à une bride à main (111) du robot industriel (110), des capteurs pour détecter les forces et/ou les couples sur les axes du bras articulé (120); et de préférence encore dans l'ordre donné:
b) démarrage de la pièce à usiner par le robot articulé (120);
c) déterminer à partir des forces et/ou des couples détectés qu'un effecteur d'extrémité du bras articulé (120) entre en contact avec la pièce à usiner;
d) en réponse à l'étape de détermination c): rétraction de la pièce par le bras articulé (120), dans laquelle l'effecteur d'extrémité du bras articulé (120) entre en contact avec la pièce pendant l'arrêt; et
e) détecter les points de passage sur la pièce en fonction de la rétraction de la pièce.

2. Procédé selon la revendication 1, comprenant en outre:
avant b) ou d) une étape consistant à: fournir un ensemble initial de points de cheminement, dans lequel l'ensemble initial de points de chemin comprend de préférence des données CAO générées hors ligne.

3. Procédé selon la revendication 2, dans lequel le démarrage de la pièce à usiner et/ou la rétraction de la pièce à usiner est effectuée sur la base de l'ensemble initial de points de trajectoire.

4. Procédé selon l'une quelconque des revendications précédentes, dans lequel la détermination de l'étape c) comprend une détermination que les forces agissant sur les forces d'essieu et/ou les couples dépassent une valeur prédéterminée.

5. Procédé selon l'une quelconque des revendications précédentes, dans lequel la rétraction de la pièce à usiner surveillant les forces et/ou comprend des couples qui agissent sur les axes du bras articulé (120), et en adaptant en outre l'arrêt de la pièce à usiner sur la base des forces contrôlées et/ou includes couples, de sorte que l'effecteur d'extrémité du bras articulé (120) pendant l'arrêt au contact de la pièce à usiner.

6. Procédé selon l'une quelconque des revendications précédentes, dans lequel la rétraction de la pièce à usiner par le bras articulé (120) avec une force de pression prédéterminée de l'effecteur terminal du bras articulé (120) est effectuée.

7. Procédé selon l'une quelconque des revendications précédentes, comprenant en outre:
déterminer que la dimension de la pièce dépasse la plage du bras articulé (120); et in réponse à la détermination que la dimension de la workpiece, la portée du bras articulé (120) est supérieure: la réorientation du robot industriel (110).

8. Procédé selon l'une quelconque des revendications précédentes, dans lequel l'effecteur terminal du bras articulé (120) comprend un rouleau de mesure (123).

9. Procédé selon l'une quelconque des revendications précédentes, dans lequel les capteurs sont des capteurs de force-couple, en particulier basés sur une jauge de contrainte (DMS), et sur au moins un axe du bras articulé (120) sont disposés.

10. Procédé d' usinage d'une pièce, comprenant la mise en oeuvre d'un procédé selon l'une quelconque des revendications 1 à 9; et comprenant en outre les étapes de procédé suivantes après la détection des points de chemin: le désaccouplement du bras articulé (120) de la bride à main (111) du robot industriel (110); coupling un outil à la bride de main (111) du robot industriel (110); et machiner la pièce à usiner par le robot industriel (110) sur la base des points de chemin détectés, dans lequel l'outil est un outil de pliage de préférence et l'usinage de la pièce comporte de préférence un pliage de la pièce à usiner.

11. Système de robot comprenant un robot industriel (110) ayant une bride manuelle (111) pour coupler de manière séparable un bras articulé multi-axe (120), dans lequel le système est muni d'un dispositif de commande conçu pour exécuter un procédé selon l'un quelconque des revendications 1 à 10.
